# EUROPÄISCHE PATENTSCHRIFT

(11) **EP 1 950 033 B1**
(45) Veröffentlichungstag und Bekanntmachung des Hinweises auf die Patenterteilung: **18.03.2015**
(21) Anmeldenummer: 08000343.7
(22) Anmeldetag: 10.01.2008
(51) Int. Cl.: B29C 70/22, D03D 13/00, H01F 27/32, D03D 5/00, D03D 15/00, D03D 1/00, B29L 31/30

(54) **Verwendung eines Bandagenbandes zur Bandagierung elektrischer Wicklungseinheiten**
Use of a belt assembly for winding electric winding units
Utilisation d'une bande pour l'enroulement de bobines électriques

(30) Priorität: 29.01.2007 DE 102007005326
(43) Veröffentlichungstag der Anmeldung: 30.07.2008
(73) Patentinhaber: August Krempel Söhne GmbH & Co. KG, 71665 Vaihingen/Enz (DE)
(72) Erfinder: Parnell, Anthony, PR3 3SX Longridge (GB); Zaiser, Tobias, 71701 Schwieberdingen (DE)
(74) Vertreter: Patentanwälte Ruff, Wilhelm, Beier, Dauster & Partner

(56) Entgegenhaltungen:
- EP-A- 1 416 075
- FR-A- 2 028 609
- FR-A- 2 537 171
- GB-A- 2 102 035
- JP-A- 56 147 934
- US-A- 2 202 013
- US-A- 3 957 091

## Beschreibung

Die Erfindung bezieht sich auf die Verwendung eines Bandagenbandes mit einem Fasergewebe aus Kettfaden-Fasern und Schussfaden-Fasern mit gegenüber den Kettfaden-Fasern geringerem Faserquerschnitt und/oder gegenüber dem Kettfadenabstand größerem Schussfadenabstand und einem aushärtbaren Harzmaterial zur Bandagierung elektrischer Wicklungseinheiten. Speziell werden solche und ähnliche Bandagenbänder z.B. zur Bandagierung von bewegten elektrischen Wicklungseinheiten, wie Rotoren elektrischer Maschinen, um die Fliehkraft von Wicklungsteilen, Kommutatoren oder anderer nicht fixierter Baugruppen aufzunehmen, aber auch zur Bandagierung stehender elektrischer Wicklungseinheiten z.B. von Transformatoren eingesetzt.

Übliche, für diesen Zweck benutzte Bandagenbänder bestehen bevorzugt aus parallel gezwirnten Glasfäden, die mit einem noch reaktiven Kunstharzmaterial im B-Zustand als Matrix imprägniert sind. Das Kunstharzmaterial hält die parallelen Glasfäden zusammen. Derartige Bandagenbänder werden z.B. von der Firma Isovolta österreichische Isolierwerkstoffe AG unter der Bezeichnung Isoglas vom Polyester-Glas-Typ und von der Firma Isola S.p.A., Ghisalba, Italien unter der Bezeichnung Polyglas unter Verwendung eines Polyesterimidharzes vertrieben.

Ein Bandagenband dieser Art zur Bandagierung elektrischer Wicklungseinheiten ist beispielsweise auch in der Patentschrift US 3.930.915 offenbart. Das dortige Band besteht aus Glasfaser-Schussfäden, wobei die Glasfasern zu Bündeln mit 0,5 mils bis 15 mils Durchmesser gefasst sind, und Kettfäden aus einem flexiblen Fasermaterial im gleichen Durchmesserbereich. Das Bandagenband wird gleich in der fertigen Breite oder in Form eines breiteren Streifens gefertigt, der dann in Längsrichtung in das fertige Bandagenband geschnitten wird.

Bei der Verarbeitung wird das Bandagenband unter definierten Zugspannungen auf den zu bandagierenden Körper typischerweise in mehreren Lagen abhängig von der angestrebten Zugfestigkeit gewickelt. Bei einem anschließenden Härteprozess mit definiertem Zeit/Temperatur-Verlauf wird das Harzmaterial aufgeschmolzen und dann ausgehärtet.

Es zeigt sich, dass besonders bei dicken Bandagen mit einer Dicke von z.B. bis 20mm bei Verwendung des genannten Typs von Bandagenbändern mit längsparallel orientierten Glasfasern Spannungsrisse in Umfangsrichtung des bandagierten Körpers auftreten können, die in ungünstigen Fällen durch die gesamte Bandagendicke durchgehen können.

In der Patentschrift CH 404 193 ist ein gattungsgemäßes Bandagenband offenbart, das eine Gewebefolie aus dicht gepackten Glasseiden-Kettfäden und in weiten Abständen dazwischengeschossenen organischen Schussfäden beinhaltet, die mit einem wärmehärtbaren Harz in einem Harzverhältnis von 1,10 bis 1,50 imprägniert und überzogen ist. Die Gewebefolie kann z.B. 24 bis 40 Kettfäden und 0,4 bis 8 Schussfäden pro Zentimeter aufweisen. Zur Herstellung wird breites Gewebematerial in die gewünschte Bandagenbandbreite von z.B. 0,2cm bis 5cm geschnitten, wonach die so erhaltenen Gewebefolienbänder mit dem Harz imprägniert oder überzogen werden. Alternativ erfolgt zuerst das Imprägnieren und Überziehen des breiten Gewebematerials mit dem Harz, um es dann nach der Harzbehandlung in Bandagenbänder der gewünschten Breite zu schneiden. Das Zerteilen des Gewebematerials hat zur Folge, dass die Schussfäden an beiden Längsseiten des Bandagenbandes offen auslaufen.

In der Offenlegungsschrift DE 2 261 686 ist ein Bandagenband offenbart, das einen gewebten Streifen mit Glasfaser-Schussfäden und flexiblen, thermisch stabilen Kettfaden-Fasern mit einer Dehnfähigkeit von mindestens 2% in Kettrichtung beinhaltet, der mit einem quellbaren Harz beschichtet ist. Zur Herstellung des Bandagenbandes wird eine breitere Gewebebahn in Längsrichtung in kleinere Streifen zerschnitten, oder es werden kleine Gewebestreifen eingesetzt, wobei die kleinen Streifen und damit das resultierende Bandagenband typischerweise eine Breite von etwa 6mm bis 50mm aufweisen.

Bei einem in der Offenlegungsschrift DE 199 12 667 A1 in Verwendung als Isolierband zum Bewickeln eines elektrischen Leiters offenbarten Bandagenband ist ein Trägergewebe aus Kettfäden und demgegenüber feineren Schussfäden vorgesehen, auf das ein dielektrischen Material aufgebracht ist. Die Kettfadendichte ist speziell so gewählt, dass das Flächengewicht des Gewebes gleich dem Flächengewicht eines Gewebes ist, bei dem die Kett- und die Schussfäden aus dem gleichen, feineren Fadenmaterial bestehen. Das Fadengewicht der Kettfäden beträgt z.B. etwas das Doppelte des Fadengewichts der Schussfäden. Zur Herstellung dieser Isolierbänder wird ein breiteres Isolierbandmaterial in Kettfadenrichtung zu Streifen gewünschter Breite geschnitten. Das Imprägnieren mit Harz erfolgt dann nach dem Bewickeln des elektrischen Leiters mit dem Isolierband.

Die Offenlegungsschrift JP 56-147934 A offenbart eine Blattfeder, die durch Pressen eines mit einem synthetischen Harzmaterial imprägnierten Fasersubstrats und Aushärten des synthetischen Harzmaterials erhalten wird. Das Fasersubstrat beinhaltet nebeneinander angeordnete Fasergewebestreifen, die jeweils aus einer Mehrzahl paralleler Kettfäden und Schussfäden mit höchstens einem Drittel der Querschnittsfläche und des Einheitsgewichts der Kettfäden aufgebaut sind, wobei die parallelen Schussfäden von einem durchgehenden Faden gebildet und dadurch über einen Verbindungsabschnitt längsseits des jeweiligen Gewebestreifens miteinander verbunden sind. Der Abstand zwischen den parallelen, senkrecht zu den Kettfäden verlaufenden Schussfäden beträgt mindestens das Vierfache der Kettfadenbreite.

Ein ähnliches Fasergewebe ist in der Patentschrift US 2.202.013 zur Herstellung eines mit Stahldrähten verstärkten Kunststoffmaterials offenbart, wobei dort die Kettfäden von feinen Stahldrähten mit einem Durchmesser von höchstens etwa 0,008 Inch gebildet sind und die Schussfäden vorzugsweise aus Baumwolle bestehen.

Der Erfindung liegt als technisches Problem die Bereitstellung einer Bandagenbandverwendung der eingangs genannten Art zugrunde, durch die auch bei dickeren Bandagen elektrischer Wicklungseinheiten die gewünschte Festigkeit erhalten und die Gefahr von Rissbildungen minimiert wird.

Die Erfindung löst dieses Problem durch die Bereitstellung einer Verwendung eines Bandagenbandes mit den Merkmalen des Anspruchs 1 oder 2. Bei dem hierbei verwendeten Bandagenband ist das Fasergewebe aus Kettfaden-Fasern und Schussfaden-Fasern mit gegenüber den Kettfaden-Fasern geringerem Faserquerschnitt und/oder gegenüber dem Kettfadenabstand größerem Schussfadenabstand aufgebaut.

Des Weiteren ist gemäß einem ersten Erfindungsaspekt eine durchgehende geschlossene Schussfaden-Webart vorgesehen, d.h. je zwei in Kettfadenrichtung benachbarte Schussfäden hängen über einen Schussfaden-Verbindungsabschnitt an einer der beiden Längsseiten des Bandagenbandes miteinander zusammen. Diese geschlossene Schussfaden-Webart sichert vor einem Auseinandergehen der in Querrichtung nebeneinanderliegenden Kettfaden-Fasern, wodurch die Querfestigkeit des Bandagenbandes im Vergleich zu Bandagenbändern mit offen endenden Schussfäden deutlich gesteigert werden kann. Dabei sind die Kettfaden-Fasern und/oder die Schussfaden-Fasern von Glasfasern, Aramidfasern, Kohlenstofffasern, Polyesterfasern und/oder anorganischen Fasern gebildet.

In einem zusätzlich oder alternativ zu diesem ersten vorgesehenen zweiten Aspekt der Erfindung sind benachbarte Schussfaden-Fasern nicht parallel, sondern schräg zueinander und/oder zu den Kettfaden-Fasern angeordnet, d.h. wenigstens einer von je zwei benachbarten Schussfäden verläuft nicht orthogonal, sondern unter einem Schrägwinkel größer 0° und kleiner 90° relativ zur Kettfadenrichtung, d.h. zur Längsrichtung des Bandagenbandes. Es zeigt sich, dass diese schräge Schussfaden-Webart ebenfalls zu einem Bandagenband hoher Reißfestigkeit führt. In Kombination mit dem ersten Erfindungsaspekt ist zudem eine Minimierung der Länge der seitlichen Schussfaden-Verbindungsabschnitte möglich, ohne merklichen Verlust an erhöhter Querfestigkeit des Bandagenbandes. Es versteht sich, dass bei dieser schrägen Schussfaden-Webart, bei welcher der Abstand je zweier benachbarter Schussfäden in Querrichtung nicht konstant ist, ein mittlerer Wert des in Querrichtung nicht konstanten Schussfadenabstands zu verwenden ist, der vorzugsweise deutlich größer als der Kettfadenabstand ist.

Es zeigt sich, dass sich mit diesem Bandagenband nicht-metallische Bandagierungen realisieren lassen, die mittels der Kettfaden-Fasern auch hohen Zugbelastungen in Längsrichtung z.B. aufgrund von Zentrifugalkräften rotierender bandagierter Körper standhalten und dank eines gewissen Schuss- bzw. Querfadenanteils durch die Schussfaden-Fasern eine gute Querfestigkeit haben, welche die Bildung von Spannungsrissen wirksam unterbindet.

Zwar ließe sich eine vor Spannungsrissen sichernde erhöhte Querfestigkeit des Bandagenbandes auch durch Verwendung eines herkömmlichen reinen Glasgewebebandes in Leinwandbindung mit in Kett- und Schussrichtung praktisch gleichem Glasfaseranteil erzielen, demgegenüber hat die Erfindung jedoch den Vorteil, dass sich bei gegebener benötigter Querfestigkeit ein deutlich höherer Kettfaden-Faseranteil und damit eine entsprechend höhere Zugfestigkeit erreichbar ist, indem die Schussfaden-Fasern im Fasergewebe mit gegenüber den Kettfaden-Fasern geringerem Faserquerschnitt und/oder größerem Abstand vorgesehen sind.

In einer vorteilhaften Weiterbildung der Erfindung ist die Stärke der Schussfaden-Fasern größenordnungsmäßig etwa halb so groß gewählt wie diejenige der Kettfaden-Fasern, z.B. dadurch, dass der Schussfadenquerschnitt zwischen etwa 40% und etwa 60% des Kettfadenquerschnitts liegt.

In einer Weiterbildung der Erfindung ist der Schussfadenabstand im Bereich zwischen etwa 2mm und etwa 8mm gewählt. Dies ist in vielen Fällen mehr als der doppelte Kettfadenabstand.

In einer Ausgestaltung der Erfindung beträgt die Dicke der Fasern und damit die Bandagenbanddicke etwa 0,05mm bis etwa 0,8mm, wobei ein bevorzugter Dickenbereich zwischen etwa 0,15mm und etwa 0,30mm liegt. In einer weiteren dimensionierungsbezogenen Ausgestaltung der Erfindung weist das Bandagenband gemäß Anspruch 5 eine Breite von etwa 4mm bis etwa 300mm auf, wobei ein bevorzugter Bereich zwischen etwa 10mm und etwa 40mm ist.

Vorteilhafte Ausgestaltungen der Erfindung hinsichtlich Harzmaterialtyp sind im Anspruch 8 angegeben.

In einer Ausgestaltung der Variante mit schräger Schussfaden-Webart beträgt der Schussfaden-Schrägwinkel etwa 5° bis etwa 45°. Es zeigt sich, dass dies je nach Anwendungsfall zu besonders vorteilhaften Bandagenbandeigenschaften insbesondere hinsichtlich mechanischer Stabilität und Rissfestigkeit und damit zu einer entsprechend hohen mechanischen Stabilität von mit solchen Bandagierbändern gefertigten Bandagen führt.

Vorteilhafte Ausführungsformen der Erfindung sind in der Zeichnung dargestellt und werden nachfolgend beschrieben. Es zeigen:
- Fig. 1: eine ausschnittweise schematische Draufsicht auf ein Bandagenband mit parallelen Schussfäden,
- Fig. 2: eine Ansicht entsprechend Fig. 1 für eine Bandagenbandvariante mit größerem Schussfadenabstand und
- Fig. 3: eine ausschnittweise schematische Draufsicht auf ein Bandagenband mit nicht-parallelen Schussfäden.

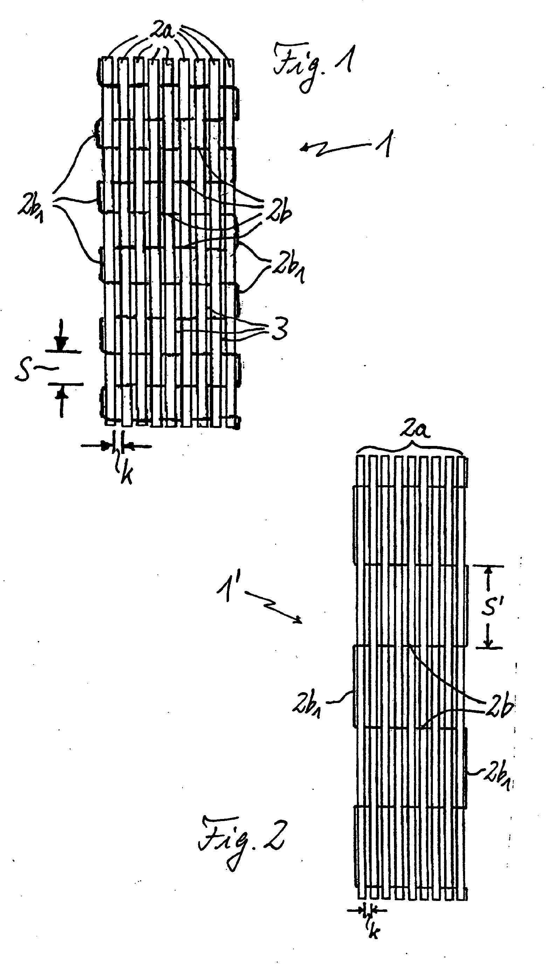

Das in Fig. 1 anhand eines repräsentativen Bandstücks 1 dargestellte Bandagenband ist aus einem Fasergewebe 2 und einem aushärtbarem Harzmaterial 3 aufgebaut. Das Fasergewebe 2 beinhaltet sich in einer Längs- bzw. Kettrichtung parallel nebeneinander erstreckende Kettfaden-Fasern 2a und sich dazu quer in einer Schussfadenrichtung parallel nebeneinander erstreckende Schussfaden-Fasern 2b. Das Harzmaterial 3 umgibt das Fasergewebe 2 als Matrix im noch reaktiven sogenannten B-Zustand und hält auf diese Weise das Fasergewebe 2 in lagerfähigem und verarbeitbarem Zustand zusammen. Das Bandagenband 1 ist in Fig. 1 in seiner ganzen Breite in Schussfadenrichtung, aber nur mit einem Teil seiner Länge in Kettfadenrichtung dargestellt.

Als Material für die Kettfäden 2a und die Schussfäden 2b sind beispielsweise Glasfasern, Aramidfasern, Kohlenstofffasern, Polyesterfasern und/oder anorganische Fasern herkömmlicher Typen verwendbar, wobei je nach Bedarf für die Schussfäden ein anderer Fasertyp als für die Kettfäden verwendbar ist und in entsprechenden Ausführungsformen auch gemischt unterschiedliche Fasertypen für die Kettfäden und/oder unterschiedliche Fasertypen für die Schussfäden zum Einsatz kommen können.

Für die aushärtbare Harzmatrix 3 sind z.B. Polyesterharze, Epoxydharze, Polyesterimidharze, Phenolharze, Acrylharze, Zyanat-Ester-Harze und/oder Polyamidharze verwendbar.

Die Schussfäden 2b sind mit gegenüber den Kettfäden 2a geringerer Stärke und/oder größerem Abstand angeordnet. So ist im gezeigten Beispiel der Schussfadenabstand S um ein Mehrfaches größer als der Kettfadenabstand k. Dabei ist mit Schussfadenabstand bzw. Kettfadenabstand vorliegend jeweils das Rastermaß gemeint, d.h. der Abstand von Mitte Schussfaden zu Mitte Schussfaden bzw. von Mitte Kettfaden zu Mitte Kettfaden, was dem lichten Abstand von Faden zu Faden zuzüglich der Fadenbreite entspricht.

Außerdem ist der Schussfadenquerschnitt deutlich geringer als der Kettfadenquerschnitt. In typischen Realisierungen beträgt der Schussfadenabstand S etwa 2mm bis etwa 8mm, während der Kettfadenabstand k z.B. höchstens etwa 3,5mm und häufig weniger als 1 mm beträgt, in einem konkreten Anwendungsfall z.B. mit einer Kettfadendichte von ca. zwölf Fäden/cm. Der Schussfadenquerschnitt liegt in vorteilhaften Ausführungsformen zwischen etwa 40% und etwa 60% des Kettfadenquerschnitts, d.h. die Schussfadenstärke wird in diesen Fällen in der Größenordnung der halben Kettfadenstärke gewählt.

Die Dicke der Kettfaden- und Schussfaden-Fasern 2a, 2b und damit des Bandagenbandes insgesamt liegt typischerweise zwischen etwa 0,05mm und etwa 0,8mm, in vielen Anwendungsfällen zwischen etwa 0,15mm und etwa 0,30mm. Die Breite des Bandagenbandes, d.h. seine Ausdehnung in der Querrichtung senkrecht zu den längs verlaufenden Kettfäden 2a, beträgt typischerweise etwa 4mm bis etwa 300mm, in vielen Anwendungsfällen zwischen etwa 10mm und etwa 40mm.

Wie aus Fig. 1 weiter ersichtlich, ist für die Schussfäden 2b eine durchgehende, geschlossene Schussfaden-Webart gewählt, bei der je zwei benachbarte Schussfaden-Fasern 2b über einen Verbindungsabschnitt 2b₁ aus dem Schussfaden-Fasermaterial miteinander verbunden sind, der in Kettfadenrichtung längsseits des Bandagenbands verläuft. Dabei sind die in Kettfadenrichtung aufeinanderfolgenden Schussfaden-Verbindungsabschnitte 2b₁ alternierend an den beiden Längsseiten des Bandagenbandes angeordnet. Mit anderen Worten lässt sich die Schussfadenanordnung bei dieser geschlossenen Schussfaden-Webart mittels eines durchgehenden Schussfadengarns realisieren, das sich in Schleifen von einer ersten Bandagenband-Längsseite senkrecht zur Kettfadenrichtung unter Bereitstellung des entsprechenden Schussfadens 2b zur gegenüberliegenden, zweiten Bandagenband-Längsseite, dort ein Stück entlang dieser zweiten Längsseite zur Bereitstellung des betreffenden Schussfaden-Verbindungsabschnitts 2b₁, dann wieder senkrecht zur Kettfadenrichtung zurück zur ersten Bandagenband-Längsseite unter Bereitstellung des nächsten Schussfadens 2b und anschließend ein Stück entlang der ersten Bandagenband-Längsseite zur Bereitstellung des nächsten Schussfaden-Verbindungsabschnitts 2b₁ usw. erstreckt. Ersichtlich definiert hierbei die Länge der seitlichen Schussfaden-Verbindungsabschnitte 2b₁ den Schussfadenabstand.

Diese geschlossene Schussfaden-Webart hat deutliche Vorteile insbesondere hinsichtlich der erzielbaren Querfestigkeit des Bandagenbandes im Vergleich zu offenen Schussfaden-Webarten üblicher Bandagenbänder, bei denen die Schussfäden an den Bandagenband-Längsseiten offen enden. Denn durch die seitlichen Schussfaden-Verbindungsabschnitte 2b₁ unterstützt das Schussfadengarn ein Zusammenhalten der Kettfaden-Fasern 2a in der Bandagenband-Querrichtung. Diese höhere Bandagenband-Querfestigkeit aufgrund der geschlossenen Schussfaden-Webart im Vergleich zu der offenen Schussfaden-Webart, wie sie beispielsweise bei Bandagenbändern vorliegt, die aus breiterem Gewebematerial geschnitten sind, ermöglicht ihrerseits eine erhöhte mechanische Stabilität der damit gefertigten Bandagen. Die mit den eigentlichen, in Querrichtung verlaufenden Schussfäden 2b einstückig verbundenen, seitlichen Schussfaden-Verbindungsabschnitte 2b₁ beugen effektiv einem Auseinandergehen des Kettfadenverbundes in der Schussfadenrichtung vor.

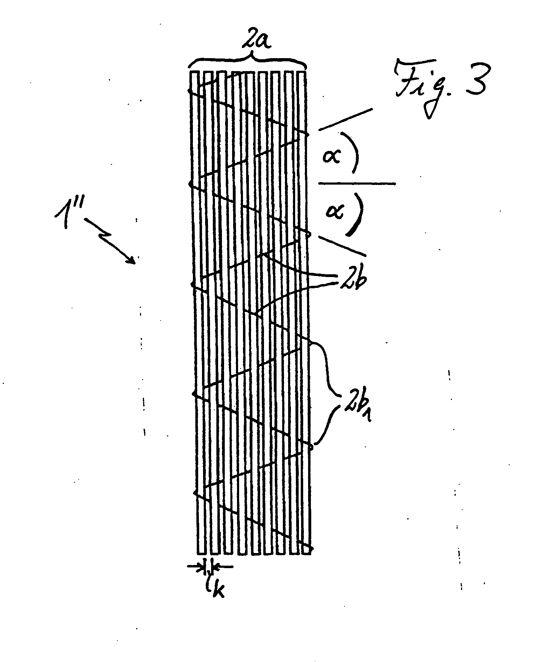

Die Fig. 2 und 3 zeigen zwei weitere Ausführungsbeispiele von Bandagenbändern mit der erwähnten geschlossenen Schussfaden-Webart, wobei zum leichteren Verständnis für identische oder funktionell äquivalente Elemente gleiche Bezugszeichen wie in Fig. 1 verwendet sind, so dass insoweit auf die obige Beschreibung dieser Elemente zu Fig. 1 verwiesen werden kann.

Das in Fig. 2 wiederum anhand eines repräsentativen Bandstücks 1' dargestellte Bandagenband unterscheidet sich von demjenigen der Fig. 1 lediglich in einem größer gewählten Schussfadenabstand S', d.h. in einer entsprechend größeren Länge der seitlichen Schussfaden-Verbindungsabschnitte 2b₁ im Verhältnis zur Länge der Schussfäden 2b, d.h. zur Bandagenbandbreite. Der gegenüber dem Beispiel von Fig. 1 weiter vergrößerte Schussfadenabstand S' bei gleichem, geringerem Kettfadenabstand k ist dank der geschlossenen Schussfaden-Webart noch immer ausreichend, um die gewünschte Stabilität und Festigkeit des Bandagenbandes sicherzustellen. Wiederum halten die seitlichen Schussfaden-Verbindungsabschnitte 2b₁ die Kettfaden-Reihenanordnung senkrecht zur Kettfadenrichtung auch unter höheren Querbelastungen zusammen mit dem Harz 3 sicher zusammen, ohne dass es zu Spannungsrissen z.B. in Kettfadenrichtung kommt.

Fig. 3 zeigt wiederum anhand eines repräsentativen Bandstücks 1" ein Bandagenband, das sich von demjenigen der Fig. 2 dadurch unterscheidet, dass die einzelnen Schussfaden-Fasern 2b im Gewebe schräg angeordnet sind, wobei in Kettfadenrichtung jeweils übernächste Schussfaden-Fasern 2b zueinander parallel und je zwei benachbarte Schussfaden-Fasern 2b unter einem Winkel, d.h. nicht-parallel, verlaufen. Dabei wird die erwähnte geschlossene Schussfaden-Webart beibehalten, wobei in diesem Fall die seitlichen Schussfaden-Verbindungsabschnitte 2b₁ von sehr geringer Länge bis fast punktuell sein können, d.h. die Schussfaden-Verbindungsabschnitte 2b₁ können sich bei dieser schrägen geschlossenen Schussfaden-Webart praktisch auf einen Garnumlenkungsbogen beschränken, mit dem an der jeweiligen Längsseite des Bandagenbandes vom einen zum nächsten schrägen Schussfaden 2b übergegangen wird.

Als günstig haben sich Schrägwinkel α der einzelnen Schussfaden-Fasern 2b bezogen auf die zur Kettfadenrichtung senkrechte Bandagenband-Querrichtung im Bereich zwischen etwa 5° und etwa 45° herausgestellt, vorzugsweise zwischen etwa 15° und etwa 25° und speziell im Bereich um etwa 20°. Da der Abstand je zweier benachbarter Schussfaden-Fasern 2b in der Bandagenband-Querrichtung nicht konstant ist, sondern zwischen praktisch null und dem Abstand zweier benachbarter Schussfaden-Verbindungsabschnitte 2b₁ linear ansteigt, ist als Schussfadenabstand in diesem Ausführungsbeispiel ein mittlerer Wert heranzuziehen, beispielsweise der Abstand benachbarter Schussfaden-Fasern 2b in der Längsmitte des Bandagenbandes.

Es versteht sich, dass in einer Variante des Ausführungsbeispiels von Fig. 3 die Schussfaden-Verbindungsabschnitte 2b₁ auch mit größerer Länge vorgesehen sein können, d.h. sie erstrecken sich dann analog zu den Beispielen der Fig. 1 und 2 in einer gewissen Länge parallel zur Kettfadenrichtung. Äquivalent können die Beispiele der Fig. 1 und 2 dahingehend modifiziert werden, dass dort unter Beibehaltung oder nur geringfügiger Reduzierung der Länge der Schussfaden-Verbindungsabschnitte 2b₁ in Kettfadenrichtung die Schussfaden-Fasern 2b schräg statt parallel zur Bandagenband-Querrichtung angeordnet werden.

Wie die gezeigten und oben erläuterten Ausführungsbeispiele deutlich machen, eignet sich das erfindungsgemäße Bandagenband vorzüglich zur nicht-metallischen Bandagierung bewegter und unbewegter elektrischer Teile und insbesondere von Wicklungseinheiten von Transformatoren, Generatoren und Motoren. Dazu wird das Bandagenband in üblicher Weise einlagig oder vorzugsweise mehrlagig auf den zu bandagierenden Körper gewickelt, wonach ein Härtungsprozess ausgeführt wird, bei dem das Harzmaterial 3 mit einem definiert vorgebbaren Zeit/Temperatur-Verlauf aus dem B-Zustand heraus aufgeschmolzen und dann ausgehärtet wird, vorzugsweise in einen duroplastischen Zustand.

Es zeigt sich, dass durch Verwendung des erfindungsgemäßen Bandagierbandes die Bandagierung einerseits aufgrund des relativ hohen Anteils an Kettfaden-Fasern 2a auch hohen Zugbelastungen in geforderter Weise standhält, wie sie z.B. bei rotierenden Motorwicklungen aufgrund von Zentrifugalkräften auftreten. Andererseits ergibt sich durch den vorhandenen Anteil an Schussfaden-Fasern 2b eine entsprechende Querstabilisierung der Bandage, die insbesondere durch die erwähnte geschlossene Schussfadenwebart im Vergleich zu aus Breitbahnen geschnittenen Bandagen deutlich gesteigert sein kann, so dass die Bandage zuverlässig gegen eine Bildung von sich vor allem entlang der Bandagenumfangsrichtung erstreckenden Spannungsrissen geschützt ist, wie sie bei herkömmlichen Bandagen mit Bandagierbändern ohne Quer-/Schussfäden bzw. endseitig offenen Schussfäden auftreten können.

Da beim erfindungsgemäßen Bandagierband der Schussfadenanteil geringer als der Kettfadenanteil gehalten wird, indem der Schussfadenabstand größer als der Kettfadenabstand und/oder der Schussfadenquerschnitt kleiner als der Kettfadenquerschnitt gewählt wird, reicht dieser als Schutz vor Rissbildung aus, ohne überdimensioniert zu sein, wozu auch die geschlossene Schussfadenwebart beiträgt, und erlaubt durch den entsprechend höheren Kettfadenanteil die Erzielung einer hohen Längs-/Zugspannungsfestigkeit, wie sie insbesondere für Bandagen auf schnell rotierenden elektrischen Wicklungen benötigt wird.

## Patentansprüche

1. Verwendung eines Bandagenbandes zur Bandagierung elektrischer Wicklungseinheiten, wobei das Bandagenband umfasst:
- ein Fasergewebe (2) aus Kettfaden-Fasern (2a) und Schussfaden-Fasern (2b) mit gegenüber den Kettfaden-Fasern geringerem Faserquerschnitt und/oder gegenüber dem Kettfadenabstand (k) größerem Schussfadenabstand (S), wobei je zwei benachbarte Schussfaden-Fasern (2b) durch einen Schussfaden-Verbindungsabschnitt (2b₁) längsseits des Bandagenbandes miteinander verbunden sind und wobei die Kettfaden-Fasern und/oder die Schussfaden-Fasern von Glasfasern, Aramidfasern, Kohlenstofffasern, Polyesterfasern und/oder anorganischen Fasern gebildet sind, und
- ein aushärtbares Harzmaterial (3).

2. Verwendung eines Bandagenbandes zur Bandagierung elektrischer Wicklungseinheiten, wobei das Bandagenband umfasst
- ein Fasergewebe (2) aus Kettfaden-Fasern (2a) und Schussfaden-Fasern (2b) mit gegenüber den Kettfaden-Fasern geringerem Faserquerschnitt und/oder gegenüber dem Kettfadenabstand (k) größerem Schussfadenabstand (S), wobei eine jeweilige Schussfaden-Faser (2b) bezüglich einer benachbarten Schussfaden-Faser (2b) und/oder einer zur Richtung der Kettfaden-Fasem senkrechten Querrichtung des Bandagenbandes schräg verläuft und je zwei benachbarte Schussfaden-Fasern (2b) durch einen Schussfaden-Verbindungsabschnitt (2b₁) längsse'rts des Bandagenbandes miteinander verbunden sind, und
- ein aushärtbares Harzmaterial (3).

3. Verwendung nach Anspruch 2, weiter **dadurch gekennzeichnet, dass**
- je zwei benachbarte Schussfaden-Fasern (2b) durch einen Schussfaden-Verbindungsabschnitt (2b₁) längsseits des Bandagenbandes miteinander verbunden sind und/oder
- die Kettfaden-Fasern und/oder die Schussfaden-Fasern von Glasfasern, Aramidfasem, Kohlenstofffasern, Polyesterfasern und/oder anorganischen Fasern gebildet sind.

4. Verwendung nach einem der Ansprüche 1 bis 3, weiter **dadurch gekennzeichnet, dass** der Faserquerschnitt der Schussfaden-Fasern zwischen etwa 40% und etwa 60% des Faserquerschnitts der Kettfaden-Fasern liegt.

5. Verwendung nach einem der Ansprüche 1 bis 4, weiter **dadurch gekennzeichnet, dass** der Schussfadenabstand im Bereich von etwa 2mm bis etwa 8mm liegt.

6. Verwendung nach einem der Ansprüche 1 bis 5, weiter **dadurch gekennzeichnet, dass** es eine Dicke im Bereich von etwa 0,05mm bis etwa 0,8mm aufweist.

7. Verwendung nach einem der Ansprüche 1 bis 6, weiter **dadurch gekennzeichnet, dass** es eine Breite im Bereich von etwa 4mm bis etwa 300mm aufweist

8. Verwendung nach einem der Ansprüche 1 bis 7, weiter **dadurch gekennzeichnet, dass** das aushärtbare Harzmaterial ein Polyesterharz, ein Epoxydharz, ein Polyesterimidharz, ein Phenolharz, ein Acrylharz, ein Zyanat-Ester-Harz und/oder ein Polyamidharz beinhaltet.

9. Verwendung nach einem der Ansprüche 1 bis 8, weiter **dadurch gekennzeichnet, dass** ein Schussfaden-Schrägwinkel relativ zur Bandagenband-Querrichtung zwischen etwa 5° und etwa 45° beträgt.

## Claims

1. Use of a belt assembly for winding electric winding units, wherein the belt assembly comprises:
- a fibrous fabric (2) composed of warp thread fibres (2a) and weft thread fibres (2b) having a smaller fibre cross section in relation to the warp thread fibres and/or having a larger warp thread spacing (S) in relation to the warp thread spacing (k), wherein in each case two adjacent weft thread fibres (2b) are interconnected by a weft thread connecting portion (2b₁) alongside the belt assembly, and wherein the warp thread fibres and/or the weft thread fibres are made of glass fibres, aramid fibres, carbon fibres, polyester fibres and/or inorganic fibres, and
- a curable resin material (3).

2. Use of a belt assembly for winding electric winding units, wherein the belt assembly comprises:
- a fibrous fabric (2) composed of warp thread fibres (2a) and weft thread fibres (2b) having a smaller fibre cross section in relation to the warp thread fibres and/or having a larger weft thread spacing (S) in relation to the warp thread spacing (k), wherein a respective weft thread fibre (2b) extends obliquely in relation to an adjacent weft thread fibre (2b) and/or a transverse direction of the belt assembly oriented perpendicular to the direction of the warp thread fibres, and in each case two adjacent weft thread fibres (2b) are interconnected by a weft thread connecting portion (2b₁) alongside the belt assembly, and
- a curable resin material (3).

3. Use according to claim 2, further **characterized in that**
- in each case two adjacent weft thread fibres (2b) are interconnected by a weft thread connecting portion (2b₁) alongside the belt assembly, and/or
- the warp thread fibres and/or the weft thread fibres are made of glass fibres, aramid fibres, carbon fibres, polyester fibres and/or inorganic fibres.

4. Use according to any one of the claims 1 to 3, further **characterized in that** the fibre cross section of the weft thread fibres is between about 40 % and about 60 % of the fibre cross section of the warp thread fibres.

5. Use according to any one of the claims 1 to 4, further **characterized in that** the weft thread spacing is in a range from about 2 mm to about 8 mm.

6. Use according to any one of the claims 1 to 5, further **characterized in that** the belt assembly has a thickness in a range from about 0.05 mm to about 0.8 mm.

7. Use according to any one of the claims 1 to 6, further **characterized in that** the belt assembly has a width in a range from about 4 mm to about 300 mm.

8. Use according to any one of the claims 1 to 7, further **characterized in that** the curable resin material includes a polyester resin, an epoxy resin, a polyester imide resin, a phenolic resin, an acrylic resin, a cyanate ester resin and/or a polyamide resin.

9. Use according to any one of the claims 1 to 8, further **characterized in that** a weft thread skew angle relative to the transverse direction of the belt assembly is between about 5° and about 45°.

## Revendications

1. Utilisation d'une bande de gainage pour le gainage d'unités de bobines électriques, la bande de gainage comprenant :
- un tissu fibreux (2) constitué de fibres de fils de chaîne (2a) et de fibres de fils de trame (2b) ayant une section transversale de fibre plus petite par rapport aux fibres de fils de chaîne et/ou un écart entre les fils de trame (S) plus grand par rapport à l'écart entre les fils de chaîne (k), deux fibres de fils de trame adjacentes respectives (2b) étant connectées l'une à l'autre par une portion de connexion de fils de trame (2b₁) du côté longitudinal de la bande de gainage et les fibres de fils de chaîne et/ou les fibres de fils de trame étant formées par des fibres de verre, des fibres d'aramide, des fibres de carbone, des fibres de polyester et/ou des fibres inorganiques, et
- un matériau à base de résine durcissable (3).

2. Utilisation d'une bande de gainage pour le gainage d'unités de bobines électriques, la bande de gainage comprenant :
- un tissu fibreux (2) constitué de fibres de fils de chaîne (2a) et de fibres de fils de trame (2b) ayant une section transversale de fibre plus petite par rapport aux fibres de fils de chaîne et/ou un écart entre les fils de trame (S) plus grand par rapport à l'écart entre les fils de chaîne (k), une fibre de fils de trame respective (2b) s'étendant obliquement par rapport à une fibre de fils de trame adjacente (2b) et/ou par rapport à une direction transversale de la bande de gainage perpendiculaire à la direction des fibres de fils de chaîne et deux fibres de fils de trame adjacentes respectives (2b) étant connectées l'une à l'autre par une portion de connexion de fils de trame (2b₁) du côté longitudinal de la bande de gainage, et
- un matériau à base de résine durcissable (3).

3. Utilisation selon la revendication 2, **caractérisée en outre en ce que** :
- deux fibres de fils de trame adjacentes respectives (2b) sont connectées l'une à l'autre par une portion de connexion de fils de trame (2b₁) du côté longitudinal de la bande de gainage et/ou
- les fibres de fils de chaîne et/ou les fibres de fils de trame sont formées par des fibres de verre, des fibres d'aramide, des fibres de carbone, des fibres de polyester et/ou des fibres inorganiques.

4. Utilisation selon l'une quelconque des revendications 1 à 3, **caractérisée en outre en ce que** la section transversale de fibre des fibres de fils de trame représente entre environ 40 % et environ 60 % de la section transversale de fibre des fibres de fils de chaîne.

5. Utilisation selon l'une quelconque des revendications 1 à 4, **caractérisée en outre en ce que** la distance entre les fils de trame est comprise entre environ 2 mm et environ 8 mm.

6. Utilisation selon l'une quelconque des revendications 1 à 5, **caractérisée en outre en ce que** l'épaisseur est comprise entre environ 0,05 mm et environ 0,8 mm.

7. Utilisation selon l'une quelconque des revendications 1 à 6, **caractérisée en outre en ce que** la largeur est comprise entre environ 4 mm et environ 300 mm.

8. Utilisation selon l'une quelconque des revendications 1 à 7, **caractérisée en outre en ce que** le matériau à base de résine durcissable contient une résine de polyester, une résine époxy, une résine de polyesterimide, une résine phénolique, une résine acrylique, une résine cyanate ester et/ou une résine de polyamide.

9. Utilisation selon l'une quelconque des revendications 1 à 8, **caractérisée en outre en ce qu'**un angle d'oblicité du fil de trame par rapport à la direction transversale de la bande de gainage est compris entre environ 5° et environ 45°.
